# EUROPEAN PATENT SPECIFICATION

(11) **EP 0 715 447 B1**
(45) Date of publication and mention of the grant of the patent: **04.06.2003**
(21) Application number: 96200032.9
(22) Date of filing: 06.03.1990
(51) Int. Cl.: H04N 1/21

(54) **Printing apparatus**
Druckgerät
Appareil d'impression

(30) Priority: 07.03.1989 JP 5291189
(43) Date of publication of application: 05.06.1996
(62) Divisional of application: 90302356.2
(73) Proprietor: CANON KABUSHIKI KAISHA, Tokyo (JP)
(72) Inventor: Nakajima, Nobuyuki, c/o Canon Kabushiki Kaisha, Tokyo (JP)
(74) Representative: Beresford, Keith Denis Lewis

(56) References cited:
- EP-A- 0 042 071
- EP-A- 0 087 912
- PATENT ABSTRACTS OF JAPAN vol. 11, no. 341 (E-554), 7 November 1987 & JP-A-62 120775 (RICOH CO. LTD.), 2 June 1987,
- PATENT ABSTRACTS OF JAPAN vol. 12, no. 150 (E-606), 10 May 1988 & JP-A-62 264757 (RICOH CO. LTD.), 17 November 1987,

## Description

This application is a divisional application of our copending European Patent Application No. 90302356.2.

The present invention relates to a printing apparatus and, more particularly, to a printing apparatus using a cache memory to realize a character output.

Hitherto, in many printing apparatuses, for instance, when a vector character is output, the vector character is developed in a bit map on the basis of the character information of the vector character and is temporarily written into a cache memory. Since there is a limitation in the capacity of the cache memory, when the memory area lacks or after the elapse of a predetermined time or the like, the cache memory is initialized for the next use.

However, in the conventional apparatus, since the rewriting and clearing processes of the cache memory are executed asynchronously with the printing operation of the printing apparatus, for instance, in the case where a paper jam occurs in the printing apparatus and the page must be again formed, it is necessary to again execute the processes from the development of a bit map into the cache memory.

Japanese Patent Abstract No. JP-A-62,264,757 discloses a copier having a buffer memory for picture data.

According to one aspect of the present invention there is provided a printing apparatus as set out in claim 1.

According to a second aspect of the present invention there is provided a method of printing data as set out in claim 9.

How the invention may be carried out will now be described by way of example only and with reference to the accompanying drawings in which:

### BRIEF DESCRIPTION OF THE DRAWINGS

Fig. 1 is a constructional diagram showing an example of a printing apparatus according to an embodiment of the present invention;
Fig. 2 is a flowchart showing a processing procedure in the embodiment;
Fig. 3 is a diagram showing a structure of a printer; and

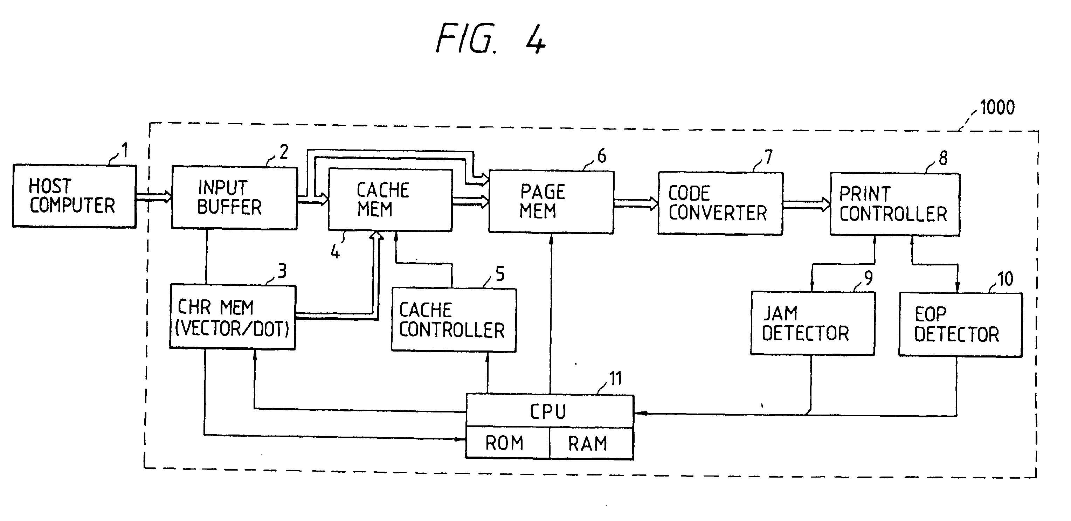

Fig. 4 is a constructional diagram showing an example of a printing apparatus according to another embodiment.

### DETAILED DESCRIPTION OF THE PREFERRED EMBODIMENTS

A preferred embodiment according to the present invention will be described in detail hereinbelow with reference to the drawings.

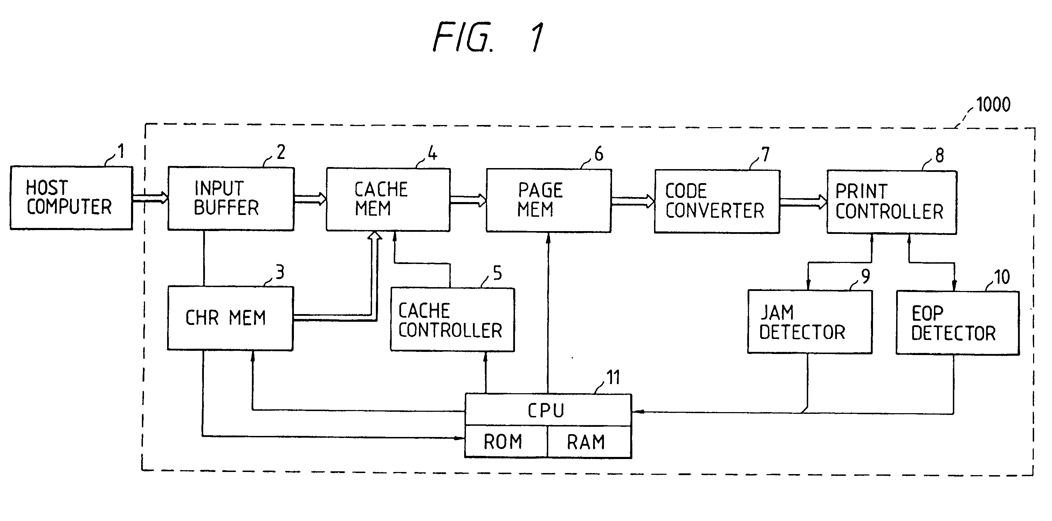

### (Description of the construction (Fig. 1))

Fig. 1 is a constructional diagram showing an example of a printing apparatus according to the invention. In the diagram, reference numeral 1 denotes a host computer to transmit various data and 1000 indicates a printer.

### (Constructional diagram of the printer 1000)

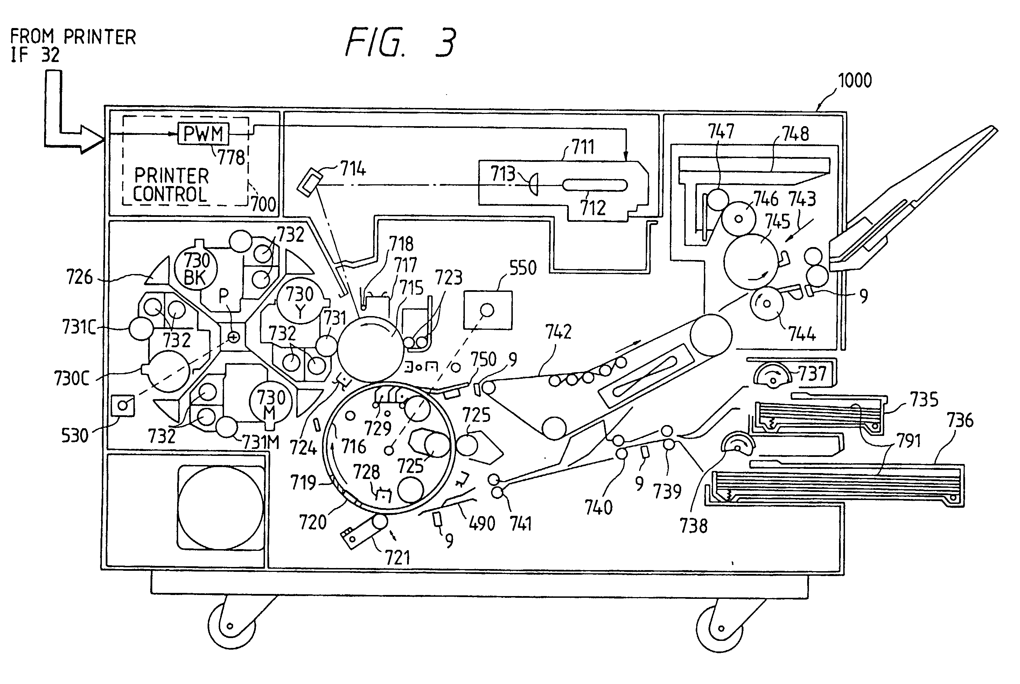

An outline of the printer 1000 shown in Fig. 1 will now be described with reference to Fig. 3. Reference numeral 778 denotes a pulse width modulator (PWM). The PWM 778 receives data from the host computer 1 shown in Fig: 1 through a printer interface (I/F) 32 and converts, for instance, a binary or multivalue digital image signal into an analog image signal and compares the analog image signal with a triangular wave of a predetermined period, thereby forming a pulse width modulation (PWM) signal. The PWM signal is supplied to a laser output section 711 at the post stage and utilized there to form a gradation image by on/off modulating a laser beam. Although a flow of data is omitted, it is practically shown in Fig. 1. Reference numeral 711 denotes a scanner comprising: a laser output section to convert the image signal from the PWM 778 into a photo signal; a polygonal mirror 712 of a polyhedron (for example, octahedron), a motor (not shown) to rotate the mirror 712; an f/θ lens (image forming lens) 713; and the like. Reference numeral 714 indicates a reflecting mirror to change a light path of a laser beam and 715 indicates a photo sensitive drum. The laser beam emitted from the laser output section is reflected by the polygonal mirror 712 and passes through the lens 713 and mirror 714 and linearly scans (raster scan) on the surface of the drum 715, thereby forming a latent image corresponding to an input image.

Reference numeral 717 indicates a primary charging device; 718 a whole surface exposing lamp; 723 a cleaner section to collect the residual toner which was not copy transferred; and 724 a pre-copy transfer charging device. Those components are arranged around the drum 715.

Reference numeral 726 denotes a developing unit to develop the electrostatic latent image formed on the surface of the photosensitive drum 715 by the laser exposure. Reference numerals 731Y, 731M, 731C, and 731Bk indicate developing sleeves which are come into contact with the drum 715 and directly develop the latent image; 730Y, 730M, 730C, and 730Bk represent toner hoppers to keep spare toners; and 732 denotes screws to transport a developing agent. The developing unit 726 is constructed by the sleeves 731Y to 731Bk, toner hoppers 730Y to 730Bk, and screws 732. Those components are arranged around a rotary shaft P of the developing unit. For instance, in the case of forming a yellow toner image, the yellow toner development is executed at the position shown in the diagram. When a magenta toner image is formed, the developing unit 726 is rotated around the shaft P as a rotational center in the diagram and the developing sleeve 731M in the magenta developing device is set at the position which is come into contact with the photo sensitive drum 715. The developments of the cyan and black toner image are also executed in a manner similar to the above. Although the above embodiment has been described with respect to a color printer, the invention can be also applied to a printer constructed by only the unit of black Bk or a printer to form a black and white pattern by using only the Bk unit.

Reference numeral 716 denotes a copy transfer drum to copy transfer the toner image formed on the photo sensitive drum 715 onto a paper; 719 indicates an actuator plate to detect a moving position of the copy transfer drum 716; 720 a home position sensor to detect that the copy transfer drum 716 has moved the home position when the actuator plate 719 approaches; 725 copy transfer drum cleaners; 727 a paper pressing roller; 728 a discharging device; and 729 a copy transfer charging device. The above components 719, 720, 725, 727, 728, and 729 are arranged around the copy transfer drum 716.

On the other hand, reference numerals 735 and 736 denote paper feed cassettes to enclose papers (cut sheets); 737 and 738 indicate paper feed rollers to feed the papers from the cassettes 735 and 736; and 739, 740, and 741 represent timing rollers for matching the timing to feed and convey the papers. The paper which was fed and conveyed through those components is led to a paper guide 749 and the front edge is grasped by a gripper, which will be explained hereinlater, and is wrapped around the copy transfer drum 716. Then, the processing routine advances to the image forming process.

Reference numeral 550 denotes a drum rotating motor for synchronously rotating the photo sensitive drum 715 and copy transfer drum 716. Reference numeral 750 indicates a peeling-off claw to peel off the paper from the copy transfer drum 716 after completion of the image forming process; 742 a conveying belt to convey the paper which was peeled off; and 743 an image fixing section to fix the paper which was conveyed by the conveying belt 742. The image fixing section 743 has a pair of thermal pressure rollers 744 and 745. Reference numeral 9 indicates a paper jam detector, which will be explained later. The jam detector 9 can be arranged at any position on the conveying path.

Returning to Fig. 1, reference numeral 2 indicates an input buffer to temporarily store the data from the host computer 1; 3 denotes a character information memory to store character information (for instance, vector coordinates, character pitch, attribute, etc.); 4 a cache memory to store the data which was converted into a bit map on the basis of the character information in the memory section 3; 5 a cache controller to write and clear the data in the cache memory 4; 6 a page memory for receiving the bit map data from the cache memory 4 and storing the data of one page; 7 a code converter for converting the bit map data from the page memory 6 into the video signal and outputting; 8 a print controller to control the printing operation on the basis of the video signal; 9 the jam detector to detect a paper jam which occurred in the print controller 8; 10 an end-of-print detector to detect the end of print in the print controller 8; and 11 a CPU to control the whole apparatus. The CPU 11 includes an ROM to store a processing procedure of the CPU, which will be explained hereinlater, and an RAM which is used as a work area.

### (Outline of the operation)

An outline of the operation of the printing apparatus in the embodiment with the above construction will now be described hereinbelow.

When print data or the like is input from the host computer 1, the data is accumulated in the input buffer 2. The vector coordinates, character pitch, attribute, etc. are extracted from the character information memory 3 and a bit map is developed on the basis of the accumulated data. Until a signal indicative of the end of print of the previous page by the print controller 8 is detected by the end-of-print detector 10 the cache controller 5 inhibits writing the bit map into the cache memory 4, thereby preventing the bit map data being broken. After that, when the end-of-print detector 10 detects the end of print of the image data of the page, the state of the cache memory 4 is discriminated and the writing operation is executed. If the area in the cache memory 4 is insufficient, the writing operation into the cache memory 4 is executed after the memory has been cleared. If the area in the cache memory still exists, the writing operation into the cache memory 4 is immediately performed. When an amount of data which was transferred from the cache memory 4 to the page memory 6 reaches the amount of one page, the print controller 8 is made operative so as to start the printing operation. On the other hand, the activated print controller 8 receives the bit map data which was converted into the video signal by the code converter 7 and starts the printing process. After that, upon completion of the printing process of one page, the page memory 6 is cleared to print the next page. If page data to be printed exists, the writing to the cache memory 4 is restarted.

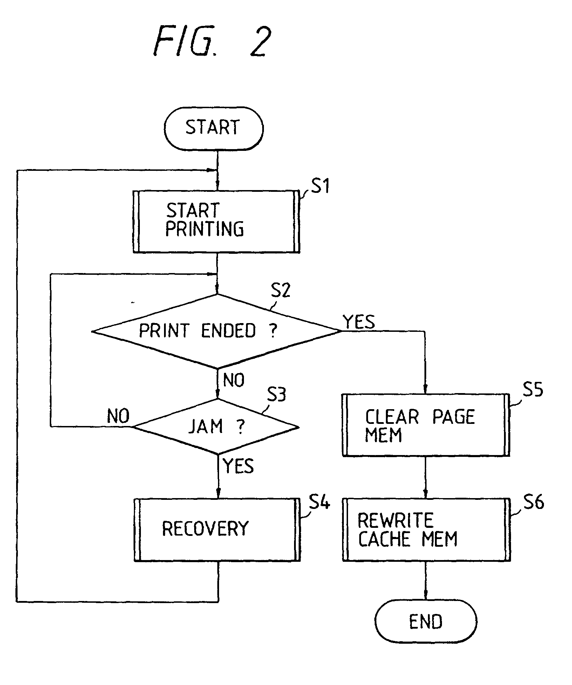

### (Description of the processing procedure (Fig. 2))

The processing procedure in the embodiment will now be described hereinbelow in accordance with the flowchart shown in Fig. 2.

As mentioned above, the data from the host computer 1 is stored into the input buffer 2 and serially processed. The character information is extracted from the character information memory 3 and developed to a bit map on the basis of the input data. Until the signal indicative of the end of printing operation of the data of the previous page by the print controller 8 is detected by the end-of-print detector 10, the cache controller 5 does not execute the writing operation to the cache memory 4. After that, when the end of printing operation of the page is detected by the end-of-print detector 10 and is informed to the cache controller 5 through the CPU 11, the state of the cache memory 4 is monitored. If the area in the cache memory 4 is insufficient, the writing operation to the cache memory 4 is executed after the memory 4 has been cleared. If capacity in the cache memory 4 is adequate, the writing operation to the cache memory is immediately executed.
When an amount of data which was transferred from the cache memory 4 to the page memory 6 reaches the amount of one page, in step S1, the print controller 8 is activated so as to start the printing operation. That is, the bit map data of one page is converted into the video signal by the code converter 7 and transferred to the print controller 8. Next, when the print controller 8 starts the printing operation, rewriting of the cache memory 4 is prevented. In step S2, a check is made to see if the end-of-print signal has been input from the end-of-print detector 10 or not. In the next step S3, a check is made to see if a jam signal from the jam detector 9 has been input or not. If the paper jam has occurred, the processing routine advances to step S4. For instance, after an error was indicated or the data in the page memory 6 was regenerated (the character data of the page remains in the cache memory 4), the processing routine is returned to step S1 and the printing operation is restarted.

On the other hand, when the end of print signal is input from the end-of-print detector 10 in step S2, the processing routine advances to step S5 and the content of the page in the page memory 6 is cleared. In step S6, the data in the cache memory 4 can be rewritten. By the rewriting process, if necessary, the development into the cache memory 4 for the next page is started and the forming process of the data in the page memory 6 is started.

According to the embodiment, the rewriting of the data in the cache memory is executed after the data of the page was transferred to the print controller. Therefore, the operation of re-developing the bit map into the cache memory when trouble such as a paper jam in the print controller has occurred is not necessary.

In the embodiment, the content in the cache memory 4 for the next page cannot be rewritten until the completion of the printing process in the print controller 8. However, there is also considered a method whereby a plurality of cache memories 5 are prepared, bit map data are sequentially preliminarily developed, and when the printing process is finished in the print controller 8, the content of the corresponding cache memory 4 is updated.

As described above, by executing the writing and clearing operations to the cache memory synchronously with the printing operation, for instance, even if a paper jam or the like occurred, there is no need to execute the development to the cache memory and the process can be simplified.

### (Vector character and dot character mixedly exist)

The above embodiment has been described with respect to the case where the character in which the data of the input buffer 2 is expressed by the vector data stored in the character information memory 3 is converted to the dots and stored into the cache memory 4. However, there is also considered a case where vector characters and dot characters are stored in the character information memory 3 and a necessary pattern is properly obtained on the basis of the style, size, and deformation information. Therefore, there is considered a case where a pattern from the vector character and a pattern from the dot character mixedly exist in one page. When a jam occurred, to reconstruct the page, the pattern stored in the cache memory 4 is again used in a manner similar to the above. As a prerequisite, there is a fact that the time which is required to develop the dot character into the page memory is shorter than the time which is required in the case of converting the vector character into the dots and developing into the page memory.

Although the invention has been described in detail above, a laser beam printer, an ink jet printer (bubble jet printer: U.S.P. No. 4,520,373) having a full line head, or the like can be also used as a printer 1000 in the invention.

## Claims

1. A printing apparatus from a host computer comprising:
means for receiving data representing an image to be printed by the apparatus;
storage means (4) for temporarily storing bit map pattern data which has been converted into a bit map pattern on the basis of coordinate point data representing the bit map pattern; and
print means (8) for printing the bit map pattern which has been converted from the bit map pattern data, and
**characterised by** writing means (5) for confirming that said storage means has an area available to store data and for writing said bit map pattern data into the available area of said storage means; and
control means (CPU11) for enabling said writing means to write said bit map pattern data into said storage means when it has been confirmed that said storage means has an area available to store the data;
wherein said print means is adapted to print the bit map pattern using said bit map pattern data written by said writing means and temporarily stored in said storage means, and said control means does not clear said storage means of the data being printed until printing has been completed.

2. Apparatus according to claim 1, wherein said control means is adapted to monitor the state of said cache memory when a printing operation is finished and if the cache memory has an available area to cause said cache controller to write bit map pattern data into said storage means; and
if there is insufficient area available to clear said cache memory before authorising the cache controller to write into said cache memory.

3. Apparatus according to claim 1 or claim 2, wherein said storage means is adapted temporarily to store said bit map pattern data which has been developed into a bit map pattern on the basis of vector data.

4. Apparatus according to any one of claims 1 to 3, wherein said storage means is adapted temporarily to store said bit map pattern data which has been developed into a bit map pattern on the basis of scalable data.

5. Apparatus according to any preceding claim, wherein said storage means is a cache memory.

6. Apparatus according to any preceding claim, wherein said print means comprises a color printer.

7. Apparatus according to any preceding claim, wherein said print means comprises a laser beam printer.

8. Apparatus according to any one of claims 1 to 6, wherein said print means prints with ink.

9. A method of printing data comprising the steps of receiving at a printing apparatus data representing an image to be printed from a host computer temporarily storing in the storage means of a printing apparatus bit map pattern data which has been converted into a bit map pattern on the basis of coordinate point data representing the bit map pattern;
confirming that said storage means has an area available to store data and writing said bit map pattern data into the available area of said storage means;
printing the bit map pattern which has been converted from the bit map pattern data and temporarily stored in said storage means, and not clearing said storage means of the data being printed until printing has been completed.

10. A method according to claim 9, wherein a control means confirms at the end of a printing operation if the storage means has sufficient area available for the next bit map pattern and causes the bit map pattern to be written to the storage means, and if insufficient area is available to clear the memory.

11. A method according to either of claims 9 to 10, wherein said bit map pattern has been developed on the basis of vector data.

12. A method according to any one of claims 9 to 11, wherein said bit map pattern has been developed on the basis of scalable data.

13. A method according to any one of claims 9 to 12, wherein said step of temporarily storing comprises storing the bit map pattern in a cache memory.

14. A method according to any one of claims 9 to 13, wherein said bit map pattern is printed by a color printer.

15. A method according to any one of claims 9 to 13, wherein said bit map pattern is printed by a laser beam printer.

16. A method according to any one of claims 9 to 13, wherein the printing is carried out with ink.

## Patentansprüche

1. Druckvorrichtung von einem Verarbeitungsrechner, mit:
einer Einrichtung zum Empfang von Daten, die ein von der Vorrichtung zu druckendes Bild repräsentieren;
einer Speichereinrichtung (4) zur zeitweisen Speicherung von Bitmaskenmusterdaten, die auf der Grundlage von das Bitmaskenmuster repräsentierenden Koordinatenpunktdaten in ein Bitmaskenmuster umgewandelt werden; und
einer Druckeinrichtung (8) zum Drucken des Bitmaskenmusters, das von den Bitmaskenmusterdaten umgewandelt wurde, und
**gekennzeichnet durch**
eine Schreibeinrichtung (5) zur Bestätigung, dass die Speichereinrichtung einen verfügbaren Bereich aufweist, um Daten zu speichern und um die Bitmaskenmusterdaten in den verfügbaren Bereich der Speichereinrichtung zu speichern; und
eine Steuereinrichtung (CPU11), um der Schreibeinrichtung zu ermöglichen, die Bitmaskenmusterdaten in die Speichereinrichtung zu schreiben, wenn bestätigt wurde, dass die Speichereinrichtung einen verfügbaren Bereich zur Speicherung der Daten aufweist;
wobei die Druckeinrichtung dahingehend ausgestaltet ist, um das Bitmaskenmuster unter Verwendung der von der Schreibeinrichtung geschriebenen und zeitweise in der Speichereinrichtung gespeicherten Bitmaskenmusterdaten zu drucken, und die Steuereinrichtung die Speichereinrichtung nicht von den gerade gedruckten Daten leert, bis das Drucken beendet wurde.

2. Vorrichtung nach Anspruch 1, wobei die Steuereinrichtung dahingehend ausgestaltet ist, um den Zustand des Pufferspeichers zu überwachen, wenn eine Druckoperation beendet ist und wenn der Pufferspeicher einen verfügbaren Bereich aufweist, um die Puffersteuereinrichtung zu veranlassen, Bitmaskenmusterdaten in die Speichereinrichtung zu schreiben; und
wenn ein nicht ausreichender Bereich verfügbar ist, um den Pufferspeicher zu leeren, bevor die Pufferspeichersteuereinrichtung autorisiert wird, in den Pufferspeicher zu schreiben.

3. Vorrichtung nach Anspruch 1 oder Anspruch 2, wobei die Speichereinrichtung dahingehend ausgestaltet ist, um die Bitmaskenmusterdaten zeitweise zu speichern, die auf der Grundlage von Vektordaten in ein Bitmaskenmuster entwickelt worden sind.

4. Vorrichtung nach Anspruch 1 bis 3, wobei die Speichereinrichtung dahingehend ausgestaltet ist, um die Bitmaskenmusterdaten zeitweise zu speichern, die auf der Grundlage von skalierbaren Daten in ein Bitmaskenmuster entwickelt worden sind.

5. Vorrichtung nach einem der vorangehenden Ansprüche, wobei die Speichereinrichtung ein Pufferspeicher ist.

6. Vorrichtung nach einem der vorangehenden Ansprüche, wobei die Druckeinrichtung einen Farbdrucker umfasst.

7. Vorrichtung nach einem der vorangehenden Ansprüche, wobei die Druckeinrichtung einen Laserstrahldrucker umfasst.

8. Vorrichtung nach einem der Ansprüche 1 bis 6, wobei die Druckeinrichtung mit Tinte druckt.

9. Verfahren zum Drucken von Daten mit den Schritten zum Empfangen bei einer Druckvorrichtung von Daten, die ein von einem Verarbeitungsrechner zu druckendes Bild repräsentieren, zeitweisen Speichern in der Speichereinrichtung einer Druckvorrichtung von Bitmaskenmusterdaten, die auf der Grundlage von das Bitmaskenmuster repräsentierenden Koordinatenpunktdaten in ein Bitmaskenmuster umgewandelt wurden;
Bestätigen, dass die Speichereinrichtung einen verfügbaren Bereich aufweist, um Daten zu speichern, und Schreiben der Bitmaskenmusterdaten in den verfügbaren Bereich der Speichereinrichtung;
Drucken des Bitmaskenmusters, das aus den Bitmaskenmusterdaten umgewandelt und zeitweise in der Speichereinrichtung gespeichert wurde, und die Speichereinrichtung nicht von den gerade gedruckten Daten Leeren, bis das Drucken beendet wurde.

10. Verfahren nach Anspruch 9, wobei eine Steuereinrichtung bei der Beendigung einer Druckoperation bestätigt, ob der Pufferspeicher einen ausreichenden verfügbaren Bereich für das nächste Bitmaskenmuster aufweist, und veranlasst, dass das Bitmaskenmuster in die Speichereinrichtung geschrieben wird, und wenn ein nicht ausreichender Bereich verfügbar ist, veranlasst, dass der Pufferspeicher geleert wird.

11. Verfahren nach einem der Ansprüche 9 bis 10, wobei das Bitmaskenmuster auf der Grundlage von Vektordaten entwickelt worden ist.

12. Verfahren nach einem der Ansprüche 9 bis 11, wobei das Bitmaskenmuster auf der Grundlage von skalierbaren Daten entwickelt worden ist.

13. Verfahren nach einem der Ansprüche 9 bis 12, wobei der Schritt zum zeitweisen Speichern ein Speichern des Bitmaskenmusters in einem Pufferspeicher aufweist.

14. Verfahren nach einem der Ansprüche 9 bis 13, wobei das Bitmaskenmuster von einem Farbdrucker gedruckt wird.

15. Verfahren nach einem der Ansprüche 9 bis 13, wobei das Bitmaskenmuster von einem Laserstrahldrucker gedruckt wird.

16. Verfahren nach einem der Ansprüche 9 bis 13, wobei das Drucken mit Tinte ausgeführt wird.

## Revendications

1. Appareil d'impression à partir d'un ordinateur hôte, comportant :
des moyens destinés à recevoir des données représentant une image devant être imprimée par l'appareil ;
des moyens d'enregistrement (4) destinés à enregistrer temporairement des données de configuration en format de grille de bits qui ont été converties en une configuration en grille de bits sur la base de données de points de coordonnées représentant la configuration en grille de bits ; et
des moyens d'impression (8) destinés à imprimer la configuration en grille de bits qui a été convertie à partir des données de configuration en grille de bits, et
**caractérisé par** des moyens d'écriture (5) pour confirmer que lesdits moyens d'enregistrement ont une zone disponible pour l'enregistrement de données et pour écrire lesdites données de configuration en grille de bits dans la zone disponible desdits moyens d'enregistrement ; et
des moyens de commande (CPU11) destinés à autoriser lesdits moyens d'écriture à écrire lesdites données de configuration en grille de bits dans lesdits moyens d'enregistrement lorsqu'il a été confirmé que lesdits moyens d'enregistrement ont une zone disponible pour l'enregistrement des données ;
dans lequel lesdits moyens d'impression sont conçus pour imprimer la configuration en grille de bits en utilisant lesdites données de configuration en grille de bits écrites par lesdits moyens d'écriture et enregistrées temporairement dans lesdits moyens d'enregistrement, et lesdits moyens de commande n'effacent pas lesdits moyens d'enregistrement des données en cours d'impression avant que l'impression soit achevée.

2. Appareil selon la revendication 1, dans lequel lesdits moyens de commande sont conçus pour contrôler l'état de ladite antémémoire lorsqu'une opération d'impression est finie et, si l'antémémoire possède une zone disponible, pour amener ladite unité de commande de l'antémémoire à écrire des données de configuration en grille de bits dans lesdits moyens d'enregistrement ; et
si l'on dispose d'une zone insuffisante, pour effacer ladite antémémoire avant d'autoriser l'unité de commande de l'antémémoire à écrire dans ladite antémémoire.

3. Appareil selon la revendication 1 ou la revendication 2, dans lequel lesdits moyens d'enregistrement sont conçus pour enregistrer temporairement lesdites données de configuration en grille de bits qui ont été développées en une configuration en grille de bits sur la base de données vectorielles.

4. Appareil selon l'une quelconque des revendications 1 à 3, dans lequel lesdits moyens d'enregistrement sont conçus pour enregistrer temporairement lesdites données de configuration en grille de bits qui ont été développées en une configuration en grille de bits sur la base de données dimensionnelles.

5. Appareil selon l'une quelconque des revendications précédentes, dans lequel lesdits moyens d'enregistrement comprennent une antémémoire.

6. Appareil selon l'une quelconque des revendications précédentes, dans lequel lesdits moyens d'impression comprennent une imprimante en couleurs.

7. Appareil selon l'une quelconque des revendications précédentes, dans lequel lesdits moyens d'impression comprennent une imprimante à faisceau laser.

8. Appareil selon l'une quelconque des revendications 1 à 6, dans lequel lesdits moyens d'impression impriment à l'aide d'une encre.

9. Procédé d'impression de données comprenant les étapes qui consistent à recevoir des données pour un appareil d'impression représentant une image devant être imprimée en provenance d'un ordinateur hôte enregistrant temporairement dans les moyens d'enregistrement d'un appareil d'impression des données de configuration en grille de bits qui ont été converties en une configuration en grille de bits sur la base de données de points de coordonnées représentant la configuration en grille de bits ;
à confirmer que lesdits moyens d'enregistrement ont une zone disponible pour l'enregistrement de données et à écrire lesdites données de configuration en grille de bits dans la zone disponible desdits moyens d'enregistrement ;
à imprimer la configuration en grille de bits qui a été convertie à partir des données de configuration en grille de bits et enregistrée temporairement dans lesdits moyens d'enregistrement, et à ne pas effacer lesdits moyens d'enregistrement des données en cours d'impression avant que l'impression soit achevée.

10. Procédé selon la revendication 9, dans lequel les moyens de commande confirment à la fin d'une opération d'impression si les moyens d'enregistrement ont une zone suffisante disponible pour la configuration en grille de bits suivante et provoquent l'écriture de la configuration en grille de bits dans les moyens d'enregistrement et, si l'on ne dispose pas d'une zone insuffisante, effacent la mémoire.

11. Procédé selon l'une des revendications 9 et 10, dans lequel ladite configuration en grille de bits a été développée sur la base de données vectorielles.

12. Procédé selon l'une quelconque des revendications 9 à 11, dans lequel ladite configuration en grille de bits a été développée sur la base de données dimensionnelles.

13. Procédé selon l'une quelconque des revendications 9 à 12, dans lequel ladite étape d'enregistrement temporaire comprend l'enregistrement de la configuration en grille de bits dans une antémémoire.

14. Procédé selon l'une quelconque des revendications 9 à 13, dans lequel ladite configuration en grille de bits est imprimée par une imprimante en couleurs.

15. Procédé selon l'une quelconque des revendications 9 à 13, dans lequel ladite configuration en grille de bits est imprimée par une imprimante à faisceau laser.

16. Procédé selon l'une quelconque des revendications 9 à 13, dans lequel l'impression est effectuée avec une encre.
